# EUROPÄISCHE PATENTANMELDUNG

(11) **EP 1 923 378 A2**
(43) Veröffentlichungstag der Anmeldung: **21.05.2008**
(21) Anmeldenummer: 07022165.0
(22) Anmeldetag: 15.11.2007
(51) Int. Cl.: C05F 3/00, C05F 15/00, C05G 1/00

(54) **Verfahren zur Aufbereitung von Gärresten und Vorrichtung zur Gewinnung von Dünger**

(30) Priorität: 15.11.2006 DE 102006054104
(71) Anmelder: Krassuski, Martin, 17268 Temmen-Ringenwalde (DE)
(72) Erfinder: Krassuski, Martin, 17268 Temmen-Ringenwalde (DE)
(74) Vertreter: Jacobi, Markus Alexander

(57) **Zusammenfassung**

Ein Verfahren zur Aufbereitung von Gülle oder anderen organischen Abfallprodukten, bei dem im Wesentlichen die folgenden Schritte durchgeführt werden:
a) Abtrennung von Feststoffen aus der Gülle bzw. den anderen organischen Abfallprodukten
b) separate Verwertung der Feststoff-Komponente und der flüssigen Komponente
c) thermische Behandlung der flüssigen Komponente unter Durchmischung und unter Zusatz einer Gips-Suspension und gegebenenfalls zusätzlichem CO₂ bei Temperaturen von 30 bis 90° C unter Einwirkung eines Unterdruck von 30 bis 900 mbar, wobei für die thermische Behandlung die Abwärme eines Blockheizkraftwerks genutzt wird,
d) Absetzen der beim Verfahrensschritt c) gebildeten bzw. eingesetzten Feststoffe und Aufkonzentrierung der flüssigen Phase durch Verdampfung bei einer Temperatur von 30 bis 90° C bei einem Unterdruck von 40 bis 600 mbar,
e) separate Ausbringung des bei der Verdampfung der flüssigen Phase gebildeten Kondensats und Abtrennung des verbliebenen Konzentrats,

bietet für landwirtschaftliche Betriebe eine technisch einfach zu realisierende Variante zur Entsorgung von biologischen Abfällen.

## Beschreibung

Die vorliegende Erfindung betrifft ein thermisches Verfahren und eine Vorrichtung zur Gewinnung von Stickstoffdünger aus Gärresten, Gülle und anderen organischen Abfallprodukten, insbesondere in flüssiger Phase wie Suspension, Emulsion oder Lösung, sowie ein Verfahren zur Hygienisierung von organischen Abfallprodukten. Eine Emissionsminderung bei der thermischen Behandlung von Gärresten und Gülle kann durch die Verwendung von mineralischen Zusätzen und/oder die Einspeisung von Kohlendioxid erfolgen.

Seit Jahren kann eine zunehmende Intensivierung der Landwirtschaft beobachtet werden. Ein landwirtschaftlicher Betrieb hat heute nicht mehr 20 Schweine, 15 Kühe und mehrere Hektar Land sondern muss auf häufig begrenztem Raum viele Hunderte von Tieren züchten und zur Schlachtreife bringen. Dies ist mit erheblichen Entsorgungsproblemen für die tierischen Exkremente verbunden. Gleichzeitig liegen die Großbetriebe oftmals nicht in Regionen, in denen ein unmittelbarer Bedarf an Düngemitteln besteht. Landwirtschaftliche Biogasanlagen in Verbindung mit entsprechenden gesetzlichen und steuerlichen Regelungen erschließen den Landwirten heute neue Einkommensquellen. Die bei der Vergasung entstehenden großen Mengen an Gärresten bedeuten jedoch ein zunehmendes Entsorgungsproblem.

Es sind bereits verschiedene Verfahren zur Gewinnung von Düngemitteln aus organischen Abfällen wie frischer und vergorener Gülle, Gärresten, Tierexkrementen, Pflanzenresten, Jauche, Mist oder Klärschlamm bekannt, die sowohl auf die Herstellung des Düngemittels selbst als auch auf die Hygienisierung der Ausgangsprodukte und die Minderung der Emission von Gasen und Geruchsstoffen, insbesondere jedoch schädlichen Treibhausgasen wie Ammoniak, gerichtet sind. Dabei wird in der Regel das entstehende Gas separat einer Neutralisation zugeführt, was technisch aufwendig ist.

So beschreiben die Dokumente DE-A 196 30 387 und DE-A 101 20 372 ein Verfahren zur Herstellung eines Düngemittels aus Gülle mit erheblich verminderter Ammoniakfreisetzung, die u. a. auf chemischen Reaktionen von Gülle mit Humus beruhen.

In DE-C 196 44 613 wird ein technisch aufwendiges Verfahren zur Herstellung von Dünger-Pellets aus Gülle unter Verwendung von CaO-haltigen Rückständen aus Rauchgasreinigungsanlagen vorgeschlagen.

In DE-A 199 05 593 wird ein Verfahren zur Entsorgung von Gärresten beschrieben, bei dem Zuschlagsstoffe wie Alumosilikate zum Abfangen von gasförmigem Ammoniak zugesetzt werden.

Aus DE-A 41 19 504 kennt man ein aufwendiges Verfahren, bei dem ein Kombinationsdünger durch Vermischen von Gülle und/oder Kot mit Gips gewonnen werden kann.

In DE-A 43 04 342 wird ein Verfahren zur Herstellung eines Düngemittels auf Basis von Klärschlamm durch Vermischen mit Calciumsulfat vorgestellt.

Nach DE-C 44 44 726 wird ein Düngemittel durch Vermischen von Gülle mit Tonmehl und Verfestigen der so erhaltenen Masse hergestellt.

In DE 103 54 063 und DE-A 10 2004 05 3 297 wird ein Verfahren zur Gewinnung von Dünger offenbart, bei dem organische Abfälle mit einem mineralischen Zusatz erhitzt werden und das entweichende Gas zur Gewinnung von Dünger in eine mineralische Suspension eingeleitet wird.

Aus DE-A 40 33 509 ist ein Verfahren bekannt, nach dem flüssige organische Dünger und Flüssigkeiten mit biogenen Stoffen wie Stroh, und mineralischen Stoffen wie Gips zu einem streufähigen Dünger vermischt und anschließend einer thermischen Nachbehandlung bei 70 bis 80 °C unterworfen werden.

In DE-A 195 47 320 wird ein Verfahren und eine Vorrichtung zur Erzeugung von ammoniakfreiem und sterilem Vollwertdünger aus biologischen Reststoffen beschrieben, wobei das vergorene Material mindestens für 1 Stunde auf Siedetemperatur erhitzt und der freigesetzte Ammoniak und andere flüchtige Stoffe mit dem Dampf ausgetragen werden.

Nach DE-A 42 43 918 muss die fermentierte Gülle in einer Kolonne gekocht werden. Die dabei austretenden ammoniakhaltigen Dämpfe werden dann in einem Mischkondensator unter Bildung von Ammoniaksalzen kondensiert.

Alle genanten Verfahren haben technische Nachteile, z. B. sind sie so aufwendig, dass sie in kleineren und mittleren Betrieben wirtschaftlich nicht sinnvoll zu betreiben sind, oder sie erfüllen die o. g. Aufgaben des erfindungsgemäßen Verfahrens nur unvollständig.

Eine Aufgabe der vorliegenden Erfindung ist die technisch auch in kleinerem Maßstab realisierbare Entsorgung von Gülle und anderen organischen Abfällen. Ferner soll auch eine Emissionsminderung von organischen Abfällen, wie beispielsweise Gülle, erreicht werden, wobei gleichzeitig die kostengünstige Herstellung von hochwertigem StickstoffDünger von Interesse ist.

Bei dem erfindungsgemäßen Verfahren soll vorzugsweise auch die Energie aus lokalen Blockheizkraftwerken, insbesondere von Biogasanlagen, genutzt werden können. Ein weiterer Aspekt ist die Nutzung von dem in diesen oder anderen Anlagen als Nebenprodukt entstehenden Kohlendioxid. Die entstehenden "Abfallprodukte des Verfahrens" sollen ferner möglichst umweltfreundlich und hygienisch unbedenklich sein. Das Verfahren selbst soll ferner wirtschaftlich und technisch einfach realisierbar sein, insbesondere soll eine separate Aufarbeitung von gasförmigen Produkten nicht erforderlich sein.

Die genannte Aufgabe wird gelöst durch ein Verfahren zur Aufbereitung von Gülle und/oder anderen organischen Abfallprodukten, bei dem im Wesentlichen die folgenden Schritte durchgeführt werden:
a) Abtrennung der Feststoffe aus der Gülle bzw. den anderen organischen Abfallprodukten
b) separate Verwertung der Feststoff Komponente und der flüssigen Komponente
c) thermische Behandlung der flüssigen Komponente unter Durchmischung und unter Zusatz einer Gips-Suspension bei Temperaturen von 30 bis 90° C unter Einwirkung eines Unterdrucks, vorzugsweise von 30 bis 900 mbar, wobei gegebenenfalls auch eine Einspeisung von gasförmigem Kohlendioxid und/oder eine regelmäßige Bestimmung des Ammoniakgehalts der flüssigen Komponente erfolgen kann, und wobei gegebenenfalls für die thermische Behandlung die Abwärme einer anderen Anlage, beispielsweise eines Blockheizkraftwerks, genutzt werden kann,
d) Absetzen der beim Verfahrensschritt c) gebildeten bzw. eingesetzten Feststoffe und Aufkonzentrierung der flüssigen Phase durch Verdampfung bei einer Temperatur von vorzugsweise 30 bis 90° C bei einem Unterdruck von vorzugsweise 40 bis 600 mbar,
e) separate Ausbringung des bei der Verdampfung der flüssigen Phase gebildeten Kondensats und Abtrennung des verbliebenen Konzentrats.

Dieses Verfahren kann z. B. zur Aufbereitung von Gülle, Gärresten, Klärschlamm oder tierischen Abfällen genutzt werden. Der Feststoffgehalt der eingesetzten Abfallprodukte ist in weitem Umfang variabel, er bestimmt jedoch die Art der im Verfahrensschritt a) anzuwendenden Separation (z.B. Filtration oder Zentrifuge). Die Abtrennung der Feststoffe muss nicht zu 100 Prozent erfolgen, in der Regel ist eine Abtrennung eines Großteils (z. B. größer 90 %, vorzugsweise größer 95 %, insbesondere größer 97 %) ausreichend. Im Prinzip kann man auch trockene Substrate (wie Hühnerkot) zunächst mit Wasser oder anderen flüssigen Abfällen aufschwemmen und anschließend das beschriebene Verfahren anwenden. Die im Verfahrensschritt a) gewonnene flüssige Komponente kann ggf. durch den Zusatz einer Säure auf einen gewünschten pH-Wert eingestellt werden und/oder im Vakuum durch Verdampfen aufkonzentriert werden.

Es hat sich gezeigt, dass verschiedene mineralische Zusätze verwendet werden können, um die Aufarbeitung der flüssigen Komponente im Verfahrensschritt c) zu verbessern, besonders zufrieden stellende Ergebnisse wurden jedoch mit einer Zuführung von Gips erreicht. Dieser Zusatz kann in Form von einzelnen, kontinuierlichen oder portionsweisen Zugaben erfolgen. Der Gips kann in fester Form (z. B. als Pulver) oder als Mischung mit anderen Komponenten, z. B. als wässrige Suspension eingesetzt werden. Besonders bewährt hat sich die Verwendung einer zähflüssigen Gips-Suspension mit einem hohen Anteil an hochwertigem Gips (Gips mit geringen Verunreinigungen).

Das Mengenverhältnis (eingesetzte Massen) von flüssiger Komponente und eingesetzter Gips-Suspension in dem Verfahrensschritt c) beträgt vorzugsweise von 100 zu 50 bis etwa bis 100 zu 1, wobei hier (rechnerisch) von einer wässrigen Gips-Suspension mit 25 Gew-% Gips ausgegangen wird.

Bevorzugt wird eine Gips-Suspension eingesetzt, die eine Gips-Aufschlämmung mit einem Feststoffgehalt von 5 bis 60 Gew.-% ist. Insbesondere geeignet ist eine Gips-Aufschlämmung in Wasser mit einem Feststoffgehalt von 10 bis 50 Gew.-%, bevorzugt 15 bis 40 Gew.-%. Es kann jedoch auch fester Gips zugesetzt werden.

Die Durchmischung von flüssiger Phase und der zugesetzten Gips-Suspension in Verfahrensschritt c) erfolgt vorzugsweise mittels mechanischen Rührens. Je nach eingesetztem Abfallprodukt kann die Menge an Gipszusatz variiert werden. Auch die Art des Vermischens kann von der Menge an Komponenten und deren Viskositäten abhängen.

Bei der Durchführung des Verfahrens kann die Einleitung von zusätzlichem Kohlendioxid von Vorteil sein, insbesondere in Verfahrensschritt c). Das Mengenverhältnis (Massen) von flüssiger Phase und eingesetztem zusätzlichem Kohlendioxid in Verfahrensschritt c) beträgt in einer bevorzugten Ausführungsform der Erfindung von 1000 zu 0,001 bis etwa 1000 zu 10, bevorzugt von 1000 zu 0,01 bis etwa 1000 zu 10. Beispielsweise können auf 1000 kg flüssige Phase 1 bis 10 kg CO₂ eingespeist werden.

Die Temperatur von 45 bis 80° C kommt bei Verfahrensschritt c) bevorzugt zur Anwendung, wobei für die thermische Behandlung insbesondere die Abwärme einer anderen Anlage, wie eines Blockheizkraftwerks, genutzt werden kann. So kann ein lokales Blockheizkraftwerk die erzeugte Abwärme über ein System von Wärmetauschern in das erfindungsgemäße Verfahren einspeisen, was zu einer besseren Energieausnutzung führt und auch konstruktive Vorteile für die Gestaltung der Anlage mit sich bringen kann.

Es hat sich ebenfalls erwiesen, dass die Einspeisung von gasförmigem Kohlendioxid in die Anlage bei der Aufbereitung der flüssigen Komponente hilfreich sein kann. Das beim Prozess entstehende Ammoniak kann dann als Ammoniumsulfat "gespeichert" werden, während sich aus dem eingespeisten Calciumsulfat (Gips) das Produkt Calciumcarbonat bilden kann. Diese Einspeisung hilft zum einen dabei, das in anderen Betrieben anfallende Kohlendioxid (Treibhausgas!) zu entsorgen, zum anderen kann Energie bei dem Verfahren der Aufbereitung der organischen Abfälle eingespart werden.

Das erfindungsgemäße Verfahren basiert insbesondere auf einer thermischen Behandlung der flüssigen Phase in den Verfahrensschritten c) und d). Hierbei kann bevorzugt ein Druck im Bereich von 40 bis 900 mbar, insbesondere von 60 bis 600 mbar angewendet werden. Die genaue Steuerung des im Verfahren anzuwendenden optimalen Drucks (bzw. des Druckverlaufs) ist auch von den Abfallprodukten und den Mengenverhältnissen abhängig.

Bei der thermischen Behandlung der flüssigen Phase im Verfahrensschritt c) wird vorzugsweise zunächst einem Druck von 40 bis 900 mbar, insbesondere 100 bis 800 mbar angewendet. Im anschließenden Verfahrensschritt d) wird eine Vakuumverdampfung bei einem Druck von 40 bis 600 mbar, insbesondere von 60 bis 400 mbar durchgeführt.

In einer besonderen Ausführungsform wird der Druck bei beiden Schritten c) und d) im Wesentlichen konstant gehalten.

In einer weiteren Ausführungsform wird in beiden Schritten die Temperatur im Wesentlichen konstant gehalten.

Bei der thermischen Behandlung in den beiden Verfahrensschritten c) und d) wird vorzugsweise die Abwärme eines Blockheizkraftwerks genutzt. In beiden Verfahrensschritten kann eine zusätzliche kontinuierliche oder schubweise Einspeisung von Kohlendioxid erfolgen.

Wenn z. B. als Abfallprodukt Gärreste verwendet wird, haben sich im Verfahrensschritt c) ein Druck von 150 bis 500 mbar und Temperaturen von 50 bis 80° C als besonders geeignet erwiesen.

Bei dem erfindungsgemäßen Verfahren kann die im Verfahrensschritt a) abgetrennte Feststoff-Komponente in spezielle Auffangbehälter aufgenommen und anschließend entsorgt werden, sie kann aber auch zusammen mit den im Verfahrensschritt d) abgesetzten Feststoffen zu einer Düngermischung verarbeitet werden. Beispielsweise kann eine Vermischung in einem Rührkessel oder Extruder erfolgen.

Es ist auch möglich, das Konzentrat aus dem Verfahrensschritt d), welches z. B. flüssig, dick-flüssig oder fest sein kann, ebenfalls zur Herstellung einer Düngermischung zu verwenden.

Die im Verfahrensschritt e) abgetrennte Kondensat-Komponente ist in einer bevorzugten Ausführungsform ein nahe zu geruchslosen Flüssigkeit (ein Trübwasser), die in Auffangbecken gelagert und/oder auf Wiesen und Felder aufgebracht werden kann. Das Trübwasser kann auch in lokale Gewässer bzw. Kläranlagen eingespeist werden.

Das Verfahren wird bevorzugt so konzipiert, dass die gesamte zur Durchführung des Verfahrens erforderliche Wärmeenergie aus einem Blockheizkraftwerk stammt. Dies gelingt insbesondere bei Verwendung einer zusätzlichen Kohlendioxid-Einspeisung.

Auch der Strom für Pumpen, Beleuchtung sowie Mess- und Regelungstechnik kann dem Blockheizkraftwerk entnommen werden, so dass eine energetisch unabhängige (autarke) Gesamtkonstruktion möglich ist.

Die in dem Verfahren anfallenden Feststoffkomponenten können als solche oder zusammen mit weiteren Hilfskomponenten (Formulierungshilfsmittel, Mineralien, Spezialdünger, etc.) zur Herstellung eines Düngemittels verwendet werden.

Die Erfindung betrifft auch die Verwendung einer Feststoffkomponente aus dem o. g. Verfahren, wobei z. B. die im Verfahrensschritt a) abgetrennte Feststoff-Komponente zusammen mit den im Verfahrensschritt d) abgesetzten Feststoffen und ggf. zusammen mit dem Konzentrat aus dem Verfahrensschritt d) zu einer Düngermischung verarbeitet werden. Aus dieser Düngermischung kann dann zusammen mit weiteren Hilfskomponenten ein Düngemittel hergestellt werden, welches abgefüllt und abtransportiert werden kann.

Gegenstand der Erfindung sind auch Düngemittel, enthaltend mindestens eine Feststoffkomponente, gewonnen aus dem o. g. Verfahren sowie ggf. eine oder mehrere weitere Hilfskomponenten. Bevorzugt ist dabei ein Düngemittel, das als Bestandteile die im Verfahrensschritt a) abgetrennte Feststoff-Komponente, die im Verfahrensschritt d) abgesetzten Feststoffe sowie ggf. das Konzentrat aus dem Verfahrensschritt d) enthält.

Der konstruktive Aufwand zur Durchführung des erfindungsgemäßen Verfahrens ist nicht sehr groß, so dass auch mit begrenzten finanziellen und technischen Mitteln eine Realisierung möglich ist.

Eine erfindungsgemäße Vorrichtung zur Durchführung eines Verfahrens zur Aufbereitung von Gülle oder anderen organischen Abfallprodukten, besteht bevorzugt im Wesentlichen aus folgenden Teilen, die jeweils per se dem Fachmann bekannt sind:
- Separator (1)
- beheizbare Rohrleitung (2)
- Reaktionsbehälter für Erwärmung unter Unterdruck (3),
- Wärmetauscher (4),
- Vorlagegefäßen, Dosierern (5, 16),
- Rührwerk (6),
- Vakuumpumpe (7),
- Absetzbehälter (8)
sowie weiteren Rohrleitungen, Absperrorganen, Mess- und Regelungstechnik sowie ggf. weiteren Auffangbecken und Mischvorrichtungen.

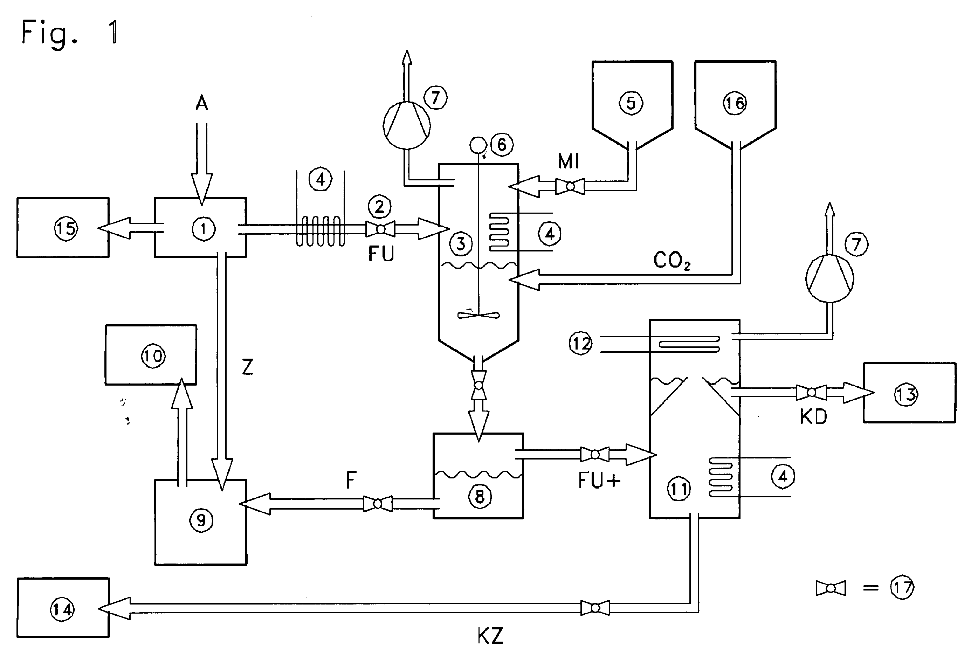

Als Beispiele für verschiedene Bauarten der erfindungsgemäßen Vorrichtung wird auf die schematischen Zeichnungen in Fig.1, Fig.2 und Fig.3 verwiesen.

Die Vorrichtung kann in einer besonderen Ausführungsform über die Wärmetauscher mit einem üblichen Blockheizkraftwerk verbunden sein. Es ist auch möglich eine integrierte Anlage aus Kraftwerk und Aufbereitungsanlage zu bauen.

Das erfindungsgemäße Verfahren und die Vorrichtung zeichnen sich durch geringe Investitions- und Betriebskosten aus und vermeiden Gefahren für Mensch und Umwelt. Das Verfahren hat durch die Nutzung der Abwärme einen minimalen Stromverbrauch. Der erzeugte Unterdruck im System kann vorzugsweise weitgehend erhalten bleiben, wenn er einmal durch eine Vakuumpumpe erzeugt wurde. Die nötige Prozesswärme wird weitgehend durch die Abwärme einer parallel betriebenen Biogasanlage bereitgestellt. Weitere Chemikalien wie etwa Säuren oder Laugen zum Abfangen von Gasen werden nicht benötigt.

Die für das Verfahren erforderliche Anlage ist leicht zu bedienen und kann sowohl als Batchprozess als auch kontinuierlich betrieben werden.

Das Verfahren wird durch nachfolgende Beispiele näher beschrieben.

### Beispiele

Drei für die Durchführung des Verfahrens geeignete Vorrichtungen sind nachfolgend schematisch dargestellt. Die Darstellungen Fig. 1, Fig. 2 und Fig. 3 zeigen beispielhaft drei erfindungsgemäße Vorrichtungen zur Aufbereitung von Gärresten bzw. Gülle.

### Bezugszeichenliste

- Separator (1)
- beheizbare Rohrleitung (2)
- Reaktionsbehälter für Erwärmung unter Unterdruck (3),
- Wärmetauscher (4),
- Vorlagegefäß, Dosierer Mineralien (5),
- Rührwerk (6),
- Vakuumpumpe (7),
- Absetzbehälter (8)
- Mischanlage (9)
- Feststofflager (10)
- Verdampfer (11)
- Kühlung (12)
- Vorfluter (13)
- Lager für Konzentrat (14)
- Lager für Fugat (15)
- Dosierer für CO₂ (16)
- Kugelhahn, Schieber (17)

- Abfallprodukt (A)
- Zentrat (Z)
- Fugat (FU)
- Mineral (MI)
- Kondensat / Trübwasser (KD)
- aufbereitetes Fugat (FU+)
- Feststoff (F)
- Konzentrat (KZ).
- Kohlendioxid (CO₂)

Die schematisch gezeichneten Anlagen arbeiten jeweils im Batchbetrieb, aber auch eine kontinuierliche Aufbereitung ist prinzipiell möglich.

Der Wärmetauscher (4) dient der Übertragung und Zwischenspeicherung der Wärme des behandelten Ablaufs zur Aufheizung der frisch eingefüllten flüssigen Komponente des Abfallproduktes.

Im Beispiel werden 2000 Liter Gärreste verwendet, die durch einen Separator (alternativ auch Grobfiltration) von der Feststoff-Komponente befreit wird. Das Wasser im Wärmetauscher wird durch ein Blockheizkraftwerk geheizt, so dass im Reaktor ständig eine Temperatur von 60 bis 80°C vorliegt. Nach dem Befüllen des Reaktionsbehälters erfolgt die Einstellung der Temperatur von 70° C. Über eine geregelte Vakuumpumpe (7) wird im Reaktor ein Druck von 250 mbar eingestellt, wobei die Druckabsenkung wiederum langsam und stetig und unter Rühren mit dem Rührwerk (6) durchgeführt wird. Zu Beginn kann die Gips-Suspension (z.B. 10 kg Gips in 30 1 Wasser) in mehreren Chargen zudosiert werden.

Während des Batchprozesses werden Temperatur und Druck im Reaktor (3) durch Zu- und Abschalten der Vakuumpumpe (7) konstant auf 70° C und 250 mbar gehalten. Die unter diesen Bedingungen entstehenden Gase, z. B. CO₂ und Ammoniak werden in der flüssigen Phase abgefangen und müssen nicht ausgetrieben und in einem nachgeschalteten Schritt entsorgt werden. Durch den Zusatz an Gips-Suspension reagiert der Ammoniak, wobei die nicht gelösten Mineralpartikel durch den Rührer (6) in Suspension gehalten werden. Die Rührgeschwindigkeit ist so zu wählen, dass keine Verstopfung von Zu- und Abflüssen durch ausgefallene Feststoffe auftritt. Es ist auch möglich, während der thermischen Behandlung wiederholt Kohlendioxid einzublasen, beispielsweise insgesamt ca. 5 kg CO₂.

Die Feststoffkomponenten können ausgetragen und ggf. ohne weitere Nachbehandlung als Düngemittel verwendet werden.

### Variante I zur Durchführung des Verfahrens (siehe Figur 1)

- Die zur Verfügung stehende Energie reicht nicht aus, die gesamte Menge an anfallendem Fugat zu verdampfen.
- Es steht genügend Fläche zur Lagerung der Feststoff-Komponente zur Verfügung.
- Es sind in unmittelbarer Nähe der Anlage ausreichend Flächen für eine Ausbringung von organischen Abfallprodukten in flüssiger Phase, Fugaten und Konzentraten vorhanden.

Die Abfallprodukte in flüssiger Phase werden in einem Separator oder einer anderen Filtereinrichtung 1 gefiltert, das Zentrat wird über eine Mischanlage 9 zu einem Feststofflagerplatz 10 verbracht. Je nach vorhandener Energie wird ein Teil des Fugates in einen Lagerbehälter 15 gebracht. Der zu behandelnde Teil des Fugates wird nun in einem Batch-Prozess weiter behandelt.

Das Fugat wird über eine beheizte isolierte Leitung 2 einem isolierten Reaktor zugeführt und dabei vorgewärmt. Der Inhalt des Reaktors wird über einen Wärmetauscher 4 auf 80°C erhitzt. Der Behälter ist doppelt so groß wie das Volumen des zu behandelnden Abfallproduktes gewählt, um ausreichend Volumen für die ablaufenden chemischen Reaktionen zu gewährleisten.

Nun wird über eine Dosiereinrichtung 5 Gips (Mineralmehl), in Wasser suspendiert und über eine andere Dosiereinrichtung 16 CO₂, dem Reaktor zugeführt. Über einen Rührer 6 wird das Fugat solange durchmischt und die Feststoffe in Suspension gehalten, bis das enthaltene Ammoniak ausgetrieben ist und mit dem Gips (Mineralmehl) reagiert hat.

Die Dauer des Prozesses richtet sich nach der Art der vorgefundenen Abfallprodukte in flüssiger Phase bzw. der Menge des enthaltenen Ammoniaks. Der Prozess kann durch Unterdruck mittels Einsatzes einer Vakuumpumpe 7 beschleunigt werden.

Das aufbereitete Fugat wird nun in einen isolierten Absetzbehälter 8 gepumpt. Dort setzen sich Feststoffe und vor allem Kalk ab. Die abgesetzten Feststoffe werden über eine Mischanlage 9 zu einem Feststofflagerplatz 10 verbracht.

Das aufbereitete flüssige Fugat wird in einen ein- oder mehrstufigen Vakuumverdampfer 11 gepumpt. Dort wird das aufbereitete Fugat mit der verbliebenen zur Verfügung stehenden Energie verdampft, das Kondensat KD wird, gegebenenfalls über eine biologische Stufe in den Vorfluter 13 eingeleitet, das Konzentrat einem Lagerbehälter 14 zugeführt. Von hier wird es im Sommerhalbjahr auf landwirtschaftliche Flächen als Dünger verbracht oder als solcher vermarktet.

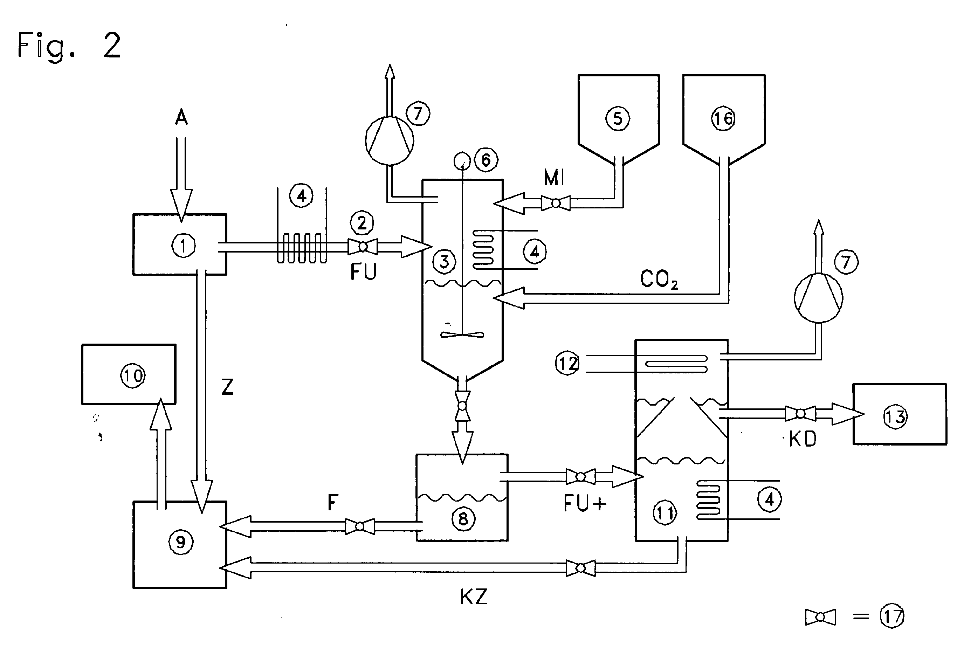

### Variante II zur Durchführung des Verfahrens (siehe Figur 2)

- Die zur Verfügung stehende Energie reicht aus, die gesamte Menge an anfallendem Fugat zu verdampfen.
- Es steht wenig Fläche zur Lagerung zur Verfügung.
- Es sind in unmittelbarer Nähe der Anlage keine Flächen für eine Ausbringung von organischen Abfallprodukten in flüssiger Phase, Fugaten und Konzentraten vorhanden.

In diesem Fall wird das gesamte hinter der Filtereinrichtung 1 anfallende Fugat im Reaktor behandelt und das aufbereitete Fugat im Verdampfer aufkonzentriert. Da ausreichend Energie zur Verfügung steht, wird ein Konzentrat mit hohem TS-Gehalt und erheblich geringerem Volumen als in Variante I erzeugt. Das Konzentrat wird der Mischanlage 9 zugeführt. Das aus Zentrat gewonnene Feststoff-Kalkgemisch und Konzentrat angemischte Material wird als hochwertiger Dünger und Bodenverbesserer vermarktet.

Die sonstigen Verfahrensschritte entsprechen den in Variante I beschriebenen Schritten.

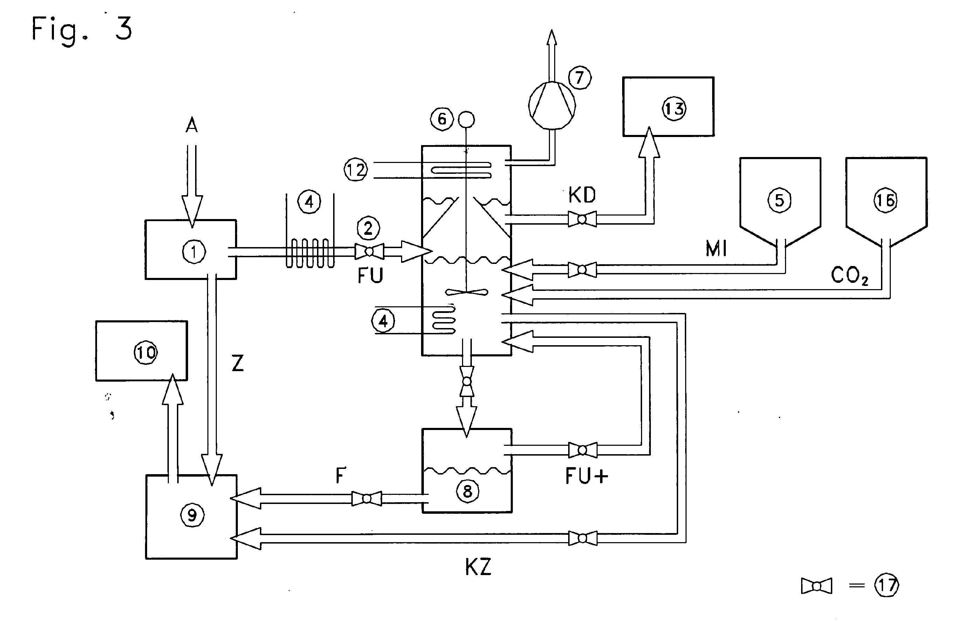

### Variante III zur Durchführung des Verfahrens (siehe Figur 3)

Bei geeigneten Ausgangssubstraten (Fugaten) kann die Funktion des Reaktors in die Verdampferanlage integriert werden. Das erwärmte Fugat 2 wird dann direkt dem Verdampfer zugeführt. Über eine Dosiereinrichtung 5 wird Gips (Mineralmehl) in Wasser suspendiert, dem Verdampfer zugeführt. Über einen Rührer 6 wird das Fugat solange durchmischt und die Feststoffe in Suspension gehalten, bis das enthaltene Ammoniak ausgetrieben ist und mit dem Gips (Mineralmehl) reagiert hat.

Das aufbereitete Fugat wird nun direkt aus dem Verdampfer in einen isolierten Absetzbehälter 8 gepumpt. Die sonstigen Verfahrensschritte entsprechen den in Variante I und II beschriebenen Schritten.

## Patentansprüche

1. Verfahren zur Aufbereitung von Gülle oder anderen organischen Abfallprodukten, bei dem im Wesentlichen die folgenden Schritte durchgeführt werden:
a) Abtrennung von Feststoffen aus der Gülle bzw. den anderen organischen Abfallprodukten
b) separate Verwertung der Feststoff-Komponente und der flüssigen Komponente
c) thermische Behandlung der flüssigen Komponente unter Durchmischung und unter Zusatz einer Gips-Suspension bei Temperaturen von 30 bis 90° C unter Einwirkung eines Unterdruck von 30 bis 900 mbar,
d) Absetzen der beim Verfahrensschritt c) gebildeten bzw. eingesetzten Feststoffe und Aufkonzentrierung der flüssigen Phase durch Verdampfung bei einer Temperatur von 30 bis 90° C bei einem Unterdruck von 40 bis 600 mbar,
e) separate Ausbringung des bei der Verdampfung der flüssigen Phase gebildeten Kondensats und Abtrennung des verbliebenen Konzentrats.

2. Verfahren nach Patentanspruch 1, **dadurch gekennzeichnet**, **das** das Verfahren zur Aufbereitung von Gülle, Gärresten, Klärschlamm oder tierischen Abfällen genutzt wird und das Mengenverhältnis von Feststoff-Komponente zu flüssiger Komponente in Verfahrensschritt a) von 1 zu 100 bis etwa 10 zu 1 beträgt.

3. Verfahren nach einem der Patentansprüche 1 oder 2, **dadurch gekennzeichnet, dass** das Mengenverhältnis von flüssiger Komponente und eingesetzter Gips-Suspension in Verfahrensschritt c) von 100 zu 50 bis etwa 100 zu 0,05 beträgt.

4. Verfahren nach einem der Patentansprüche 1 bis 3, **dadurch gekennzeichnet, dass** das Mengenverhältnis von flüssiger Phase und eingesetzter Gips-Suspension in Verfahrensschritt c) von 100 zu 20 bis etwa 100 zu 0,1 beträgt und die Durchmischung mittels mechanischen Rührens erfolgt.

5. Verfahren nach einem der Patentansprüche 1 bis 4, **dadurch gekennzeichnet, dass** das Mengenverhältnis von flüssiger Phase und eingesetzter Gips-Suspension in Verfahrensschritt c) von 100 zu 20 bis 100 zu 1 beträgt und eine Temperatur von 45 bis 80° C zur Anwendung kommt, wobei für die thermische Behandlung die Abwärme eines Blockheizkraftwerks genutzt wird.

6. Verfahren nach einem der Patentansprüche 1 bis 5, **dadurch gekennzeichnet, dass** bei der thermischen Behandlung der flüssigen Phase in den Verfahrensschritten c) und d) ein Druck im Bereich von 40 bis 900 mbar angewendet wird, und für die thermische Behandlung in den beiden Verfahrensschritten c) und d) die Abwärme eines Blockheizkraftwerks genutzt wird.

7. Verfahren nach einem der Patentansprüche 1 bis 6, **dadurch gekennzeichnet, dass** bei der thermischen Behandlung der flüssigen Phase im Verfahrensschritt c) zunächst einem Druck von 40 bis 900 mbar angewendet wird und anschließend im Verfahrensschritt d) eine Vakuumverdampfung bei einem Druck von 40 bis 600 mbar erfolgt.

8. Verfahren nach einem der Patentansprüche 1 bis 7, **dadurch gekennzeichnet, dass** als Abfallprodukt vergorene Gärreste verwendet werden und diese im Verfahrensschritt c) bei einem Druck von 150 bis 500 mbar auf Temperaturen von 50 bis 80° C erhitzt wird.

9. Verfahren nach einem der Patentansprüche 1 bis 8, **dadurch gekennzeichnet, dass** die im Verfahrensschritt a) abgetrennte Feststoff-Komponente zusammen mit den im Verfahrensschritt d) abgesetzten Feststoffen und ggf. dem Konzentrat aus dem Verfahrensschritt d) zu einer Düngermischung verarbeitet wird.

10. Verfahren nach einem der Patentansprüche 1 bis 9, **dadurch gekennzeichnet, dass** die im Verfahrensschritt e) abgetrennte Kondensat-Komponente als nahezu geruchsloses Trübwasser in Auffangbecken gelagert und/oder auf Wiesen und Felder aufgebracht wird.

11. Verfahren nach einem der Patentansprüche 1 bis 10, **dadurch gekennzeichnet, dass** als Gips-Suspension eine Gips-Aufschlämmung mit einem Feststoffgehalt von 5 bis 60 Gew.-% verwendet wird.

12. Verfahren nach einem der Patentansprüche 1 bis 11, **dadurch gekennzeichnet, dass** die gesamte zur Durchführung des Verfahrens erforderliche Wärmeenergie aus einem Blockheizkraftwerk stammt.

13. Verfahren nach einem der Patentansprüche 1 bis 12, **dadurch gekennzeichnet, dass** bei dem Verfahrensschritt b) und/oder dem Verfahrensschritt c) zusätzliches Kohlendioxid eingespeist wird.

14. Verfahren nach einem der Patentansprüche 1 bis 13, **dadurch gekennzeichnet, dass** bei dem Verfahrensschritt c) zusätzliches Kohlendioxid eingespeist wird und eine regelmäßige Bestimmung des Ammoniakgehalts der flüssigen Komponente erfolgt.

15. Verwendung einer Feststoffkomponente gewonnen aus dem Verfahren gemäß einem der Patentansprüche 1 bis 14 zusammen mit weiteren Hilfskomponenten zur Herstellung eines Düngemittels.

16. Verwendung einer Feststoffkomponente gemäß Patentanspruch 15, wobei die im Verfahrensschritt a) abgetrennte Feststoff-Komponente zusammen mit den im Verfahrensschritt d) abgesetzten Feststoffen und ggf. zusammen mit dem Konzentrat aus dem Verfahrensschritt d) zu einer Düngermischung verarbeitet werden.

17. Düngemittel, enthaltend mindestens eine Feststoffkomponente, gewonnen aus einem Verfahren gemäß einem der Patentansprüche 1 bis 14, sowie weitere Hilfskomponenten.

18. Düngemittel gemäß Patentanspruch 17, **dadurch gekennzeichnet, dass** es als Bestandteile die im Verfahrensschritt a) abgetrennte Feststoff-Komponente, die im Verfahrensschritt d) abgesetzten Feststoffe sowie ggf. das Konzentrat aus dem Verfahrensschritt d) enthält.

19. Vorrichtung zur Durchführung eines Verfahrens zur Aufbereitung von Gülle oder anderen organischen Abfallprodukten nach einem der Patentansprüche 1 bis 14, bestehend in wesentlichen aus folgenden Teilen:
- Separator (1)
- beheizbare Rohrleitung (2)
- Reaktionsbehälter für Erwärmung unter Unterdruck (3),
- Wärmetauscher (4),
- Vorlagegefäß (5),
- Rührwerk (6),
- Vakuumpumpe (7),
- Absetzbehälter (8)
sowie weiteren Rohrleitungen, Absperrorganen, Mess- und Regelungstechnik sowie ggf. weiteren Auffangbecken und Mischvorrichtungen.

20. Vorrichtung gemäß Patentanspruch 19, **dadurch gekennzeichnet, dass** sie über die Wärmetauscher mit einem Blockheizkraftwerk verbunden ist.
